# FASCICULE DE BREVET EUROPEEN

(11) **EP 2 563 655 B1**
(45) Date de publication et mention de la délivrance du brevet: **22.10.2014**
(21) Numéro de dépôt: 11715689.3
(22) Date de dépôt: 14.04.2011
(51) Int. Cl.: F16H 25/20, B64C 13/28

(54) **DISPOSITIF DE DETECTION DE LA RUPTURE D'UNE VOIE PRIMAIRE DANS UN ACTIONNEUR DE COMMANDE DE VOL**
VORRICHTUNG ZUM ERKENNEN DES BRUCHS EINES PRIMÄRPFADS IN EINEM FLUGSTEUERUNGSAKTUATOR
DEVICE FOR DETECTING BREAKAGE OF A PRIMARY PATH IN A FLIGHT CONTROL ACTUATOR

(30) Priorité: 30.04.2010 FR 1053366
(43) Date de publication de la demande: 06.03.2013
(73) Titulaire: Goodrich Actuation Systems SAS, 78530 Buc (FR)
(72) Inventeur: MOULON, Thomas, F-95120 Ermont (FR); MEDINA, Raphaël, F-95440 Ecouen (FR)
(74) Mandataire: Leckey, David Herbert
(86) Numéro de dépôt international: PCT/EP2011/055890
(87) Numéro de publication internationale: WO 2011/134799

(56) Documents cités:
- WO-A2-2008/112363
- DE-A1-102007 023 394
- US-A- 4 745 815

## Description

### Domaine technique général

La présente invention est relative à la détection de panne dans un actionneur de commande de vol.

Notamment, mais non limitativement, elle concerne la détection de la rupture d'une voie primaire d'un actionneur de commande de vol d'aéronef et la reprise d'effort par une voie secondaire dudit actionneur.

### Etat de la technique

Classiquement, de tels actionneurs comportent deux voies mécaniques, l'une primaire, l'autre secondaire, cette dernière étant destinée à reprendre l'effort lorsque la voie primaire est défaillante, en général suite à une rupture de ladite voie primaire.

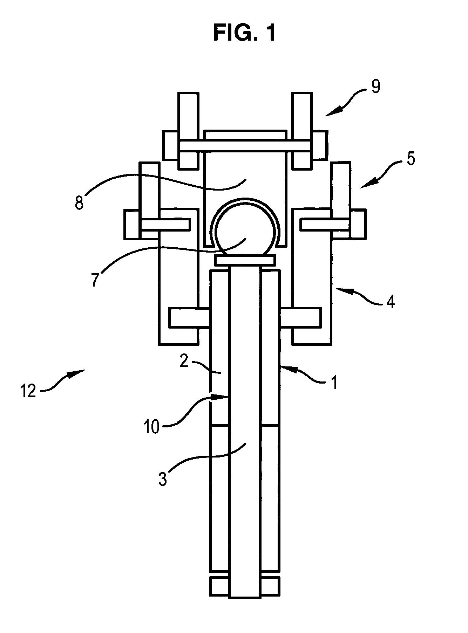

La structure générale d'un tel actionneur est schématisée en Figure 1.

En fonctionnement sur la voie primaire 1, les efforts transitent par une vis 2 creuse, par exemple à billes ou à rouleaux.

Cette caractéristique permet d'y loger une tige 3 de sécurité de reprise d'effort (barre dite « fail safe »), rainurée à ses extrémités et reliée avec jeu à la vis 2.

Cette structure assure la continuité de la transmission des efforts et de la rotation de l'ensemble, en évitant une séparation axiale des éléments de la vis, en cas de rupture de la vis elle-même.

La vis 2 se termine à une de ses extrémités par une pièce d'attache, dite attache haute primaire 4, par laquelle elle est reliée à une structure 5 de l'aéronef.

En cas de défaillance de la voie primaire 1, c'est-à-dire en cas de rupture d'un élément de la voie primaire 1, les efforts sont repris par la voie secondaire 10, et notamment par la tige 3 de sécurité dont l'extrémité est une forme mâle 7 (par exemple une sphère) disposée dans une forme femelle d'une pièce d'attache 8 de la voie secondaire, dite attache haute secondaire 8.

Cette attache 8 haute secondaire est elle-même reliée à l'aéronef au moyen d'une pièce d'attache 9 avion différente de celle utilisée pour supporter la voie primaire 1.

On connaît de l'état de la technique de nombreux systèmes de détection de rupture de la voie primaire et de reprise d'effort de la voie secondaire dans un actionneur de commande de vol.

FR 2858035 décrit un système de détection configuré pour détecter le déplacement relatif en translation de l'extrémité libre de la barre de sécurité par rapport à l'attache haute secondaire.

EP 1557588 divulgue un dispositif de détection de transfert de charge de la voie primaire vers la voie secondaire basé sur la détection du cisaillement entre pièces de l'attache haute secondaire.

EP 1972549 divulgue une solution comprenant un capteur apte à détecter un effort rapporté sur des pièces assurant l'attache haute de la voie secondaire, comme des vis de fixation de la voie secondaire ou des chapes de fixation de la voie secondaire, et apte à détecter la mise sous contrainte de celles-ci.

DE 10 2007 023394 A1 divulgue un actionneur de commande de vol présentant une voie primaire, une voie secondaire avec un dispositif de détection de la rupture de la voie primaire, ledit document est considéré comme l'état de l'art le plus proche.

Toutefois, les solutions proposées à ce jour présentent des inconvénients, car elles nécessitent une implémentation spécifique et complexe au niveau de l'attache haute secondaire des actionneurs de commande de vol.

De plus, elles nécessitent la mise en place de câbles de détection encombrants et lourds au niveau de l'attache haute secondaire. Ces solutions causent une augmentation de la masse de l'aéronef.

Certaines solutions obligent également, de par le positionnement des capteurs à l'interface des pièces de l'actionneur, à augmenter le jeu entre les pièces de l'actionneur, ce qui est préjudiciable pour la stabilité vibratoire de l'ensemble. Le jeu entre les pièces de l'actionneur est connu de l'homme du métier sous la terminologie anglo-saxonne « flutter », et connaît des spécifications exigeantes dans un aéronef.

Enfin, les solutions proposées à ce jour nécessitent un traitement électronique lourd des signaux mesurés, et connaissent une fiabilité perfectible.

### Présentation de l'invention

L'invention vise à pallier les inconvénients de solutions de l'art antérieur.

A cet effet, l'invention propose un actionneur de commande de vol présentant une voie primaire comportant une vis creuse rotative, une voie secondaire comportant une tige de sécurité de reprise d'effort traversant la vis avec un dispositif de détection de la rupture de la dite voie primaire, dans lequel ledit dispositif comprend un capteur de position, connecté à la vis pour mesurer une information représentative de sa position angulaire, et ledit dispositif étant caractérisé en ce qu'il comprend un système de déconnexion, apte à déconnecter le capteur de position de la vis en cas de déplacement relatif de la tige par rapport à la vis lors d'une rupture de la voie primaire.

L'invention est avantageusement complétée par les caractéristiques suivantes, prises seules ou en combinaison :
- le dispositif comprend un calculateur configuré pour comparer l'information mesurée par le capteur de position, et une information représentative de la position angulaire de la vis mesurée par un second capteur de position indépendant du système de déconnexion ;
- le calculateur est configuré pour détecter une rupture de la voie primaire lorsque la comparaison est supérieure ou inférieure à un seuil prédéterminé ;
- le système de déconnexion est apte à déconnecter le capteur de position de la vis lorsque la tige exerce une charge prédéterminée sur la vis, correspondant à une sollicitation mécanique exercée par la tige sur la vis lors d'une rupture de la vis ou d'un autre élément de la voie primaire;
- le système de déconnexion comprend un pion ruptible ;
- le pion ruptible a une section calibrée pour se rompre à une charge prédéterminée, correspondant à une sollicitation mécanique exercée par la tige sur la vis lors d'une rupture de la voie primaire ;
- le pion ruptible est soumis à une charge d'extraction prédéterminée, permettant une extraction du pion de la vis en cas de rupture dudit pion ;
- le capteur de position est un capteur de position angulaire.

L'invention présente de nombreux avantages.

Un avantage de l'invention est d'offrir une solution simple et peu coûteuse.

Un autre avantage de l'invention est d'offrir une solution légère, augmentant de manière négligeable la masse de l'aéronef.

Un autre avantage encore de l'invention est d'offrir une solution dont la fiabilité est améliorée.

Un autre avantage encore de l'invention est de permettre une réduction du jeu entre les pièces de l'actionneur.

Enfin, un autre avantage de l'invention est de permettre une détection dans des conditions environnementales difficiles.

### Présentation des figures

D'autres caractéristiques et avantages de l'invention ressortiront encore de la description qui suit, laquelle est purement illustrative et non limitative, et doit être lue en regard des dessins annexés sur lesquels :
- la Figure 1 est une représentation schématique illustrant le principe d'un actionneur de commande de vol;
- la Figure 2 est une représentation schématique d'un dispositif de détection et d'un actionneur de commande de vol selon l'invention ;
- la Figure 3 est une représentation schématique d'un dispositif de détection et d'un actionneur de commande de vol selon l'invention dans le cas d'une rupture de la voie primaire ;
- la Figure 4 est une représentation schématique d'un mode de réalisation d'un dispositif de détection et d'un actionneur de commande de vol selon l'invention ;
- la Figure 5 est une représentation schématique d'un mode de réalisation d'un dispositif de détection et d'un actionneur de commande de vol selon l'invention, dans le cas d'une rupture de la voie primaire.

### Description détaillée

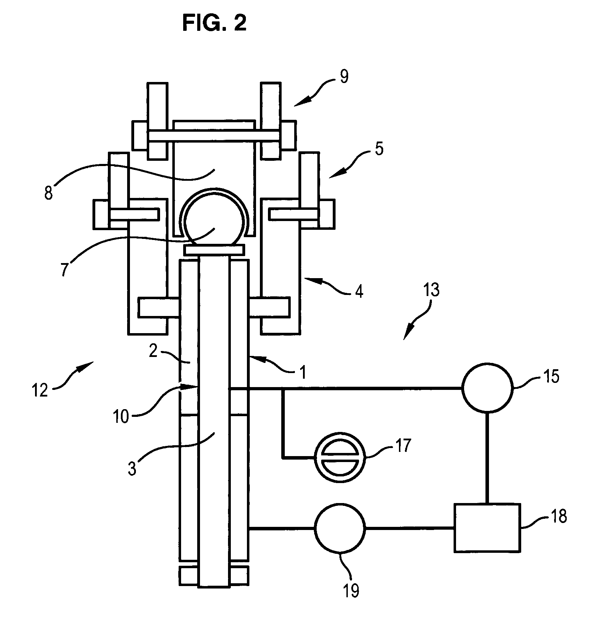

On a représenté en Figure 2 un dispositif 13 de détection de la rupture d'une voie primaire selon l'invention, ainsi qu'un actionneur 12 de commande de vol selon l'invention équipé d'un tel dispositif.

L'invention concerne aussi bien le dispositif de détection, l'actionneur de commande de vol équipé d'un tel dispositif que l'aéronef comprenant un tel actionneur de commande de vol.

Comme explicité auparavant, l'actionneur 12 de commande de vol comprend une voie primaire 1 et une voie secondaire 10.

Cet actionneur 12 est par exemple un vérin de type THSA, pour la commande d'un plan horizontal variable d'aéronef (non représenté).

Les voies primaire et secondaire comprennent de nombreux éléments, et seuls certains de ces éléments seront décrits. La structure des actionneurs de commande de vol comportant une voie primaire et une voie secondaire est largement connue de l'homme du métier.

La voie primaire 1 comprend une vis 2 creuse rotative, se terminant à une de ses extrémités par une pièce d'attache, dite attache haute primaire 4, par laquelle elle est reliée à une structure 5 de l'aéronef.

En général, la voie primaire 1 comprend également un écrou (non représenté), qui coopère avec la vis 2 en étant monté sur celle-ci et qui est relié au plan à commander.

La vis 2 est contrôlée en rotation par un moteur, ce qui permet de déplacer l'écrou précité en translation, ce dernier étant à cet effet bloqué en rotation. Le déplacement en translation de l'écrou permet ainsi de commander le basculement que l'on souhaite donner au plan horizontal variable.

Une tige de sécurité 3 s'étend à l'intérieur de la vis creuse 2. La tige de sécurité est l'un des éléments de la voie secondaire 10.

En général, cette tige 3 se termine par une tête 7 sphérique placée avec jeu à l'intérieur d'une forme sphérique femelle d'une pièce d'attache 8 de la voie secondaire, dite attache haute secondaire. Cette attache haute secondaire 8 est elle-même reliée à l'aéronef au moyen d'une pièce d'attache 9 avion différente de celle utilisée pour supporter la voie primaire 1.

La fixation de l'attache haute secondaire est connue en soi, et est notamment réalisée par des systèmes à chapes et vis de fixation.

En fonctionnement « normal », c'est la voie primaire 1 qui supporte les efforts. En cas de défaillance de la voie primaire 1, notamment par rupture d'un des éléments constitutifs de la voie primaire 1, comme par exemple l'attache haute primaire 4 ou la vis 2, c'est la voie secondaire 10 qui reprend l'effort.

Cette panne doit être détectée, afin d'informer le pilote et d'amorcer d'éventuelles opérations de maintenance au sol, voire en vol.

Le dispositif 13 de détection de la rupture de la voie primaire est apte à détecter de telles pannes.

Le dispositif 13 de détection de la rupture de la voie primaire comprend un capteur 15 de position, connecté à la vis 2 pour mesurer une information représentative de sa position angulaire.

Dans un mode de réalisation, le capteur 15 est un capteur 15 de position angulaire. Dans ce cas, l'information représentative de la position angulaire de la vis 2 est la position angulaire elle-même.

Le capteur 15 de position angulaire est configuré pour mesurer la position angulaire de la vis 2 et/ou son déplacement angulaire. Il peut s'agir d'un déplacement et/ou d'un positionnement angulaire, qui peuvent être absolus ou relatifs, selon les conventions choisies. Lorsque le capteur 15 et la vis 2 sont liés, le capteur 15 mesure donc la position angulaire de la vis 2.

Le capteur 15 de position angulaire peut par exemple être un capteur électrique actif (inductif) de mesure de déplacements en rotation de type RVDT (selon l'acronyme anglo-saxon « Rotary Variable Differential Transformer »).

D'autres capteurs de position angulaire peuvent être utilisés.

Alternativement, il peut s'agir d'un capteur de position linéaire, comme par exemple un capteur de mesure de déplacements linéaires de type LVDT (selon l'acronyme anglo-saxon « Linear Variable Differential Transformer »).

Dans ce cas, le capteur 15 de position linéaire est par exemple connecté à la vis 2 via un mécanisme de type vis à billes, qui transforme le mouvement de rotation de la vis 2 en un mouvement de translation.

Le capteur 15 de position linéaire mesure donc une position ou un déplacement linéaire, mais qui sont représentatifs de la position angulaire de la vis 2.

Tout capteur 15 de position apte à mesurer une information représentative de la position angulaire de la vis 2 peut être utilisé, c'est-à-dire que l'information mesurée (par exemple une position) est corrélée à la position angulaire de la vis 2, et permet ainsi de déduire ladite position angulaire.

Selon l'invention, le dispositif 13 de détection de la rupture de la voie primaire comprend un système 17 de déconnexion, apte à déconnecter la vis 2 du capteur de position 15 en cas de déplacement relatif de la tige 3 par rapport à la vis 2 lors d'une rupture de la voie primaire 1.

Cette déconnexion entraîne donc la rupture de la connexion du capteur 15 et de la vis 2.

Le système 17 de déconnexion est calibré pour déconnecter la liaison entre la vis 2 et le capteur 15 uniquement en cas de rupture de la voie primaire 1.

En effet, dans le cas de la rupture d'un élément de la voie primaire 1, c'est la voie secondaire 10 qui reprend l'effort.

En particulier, la tige 3 subit alors un déplacement relatif par rapport à la vis 2, l'essentiel de ce déplacement étant orienté parallèlement à la vis 2, selon un mouvement de translation, dans un sens ou dans l'autre. Ce déplacement relatif de la tige 3 par rapport à la vis 2 est détecté par le système 17 de déconnexion, qui entraîne alors une coupure de la liaison entre la vis 2 et le capteur 15 de position. Cette coupure est déclenchée au moment où le déplacement relatif de la tige 3 par rapport à la vis 2 dépasse un seuil prédéterminé, correspondant à une rupture de la voie primaire 1, ledit seuil étant connu par simulation, ou par mesure *in situ.* Il s'agit en effet d'éviter de fausses détections dues à des mouvements relatifs de la vis 2 et de la tige 3 qui ne résultent pas d'une rupture de la voie primaire 1. Seul un déplacement relatif de la tige 3 par rapport à la vis 2 au-dessus du seuil correspond à une rupture de la voie primaire 1.

En dessous du seuil prédéterminé, le système de déconnexion 17 ne coupe pas la liaison entre la vis 2 et le capteur 15 de position, ce qui évite les fausses détections.

Dans certains modes de réalisation, le système de déconnexion 17 comprend donc un capteur ou ensemble de capteurs mesurant le mouvement relatif de la tige 3 par rapport à la vis 2 (ou inversement), ce qui permet de déconnecter la vis 2 du capteur 15 de position en cas de rupture de la voie primaire 1.

Dans d'autres modes de réalisation, le système de déconnexion 17 est configuré pour déconnecter le capteur 15 de position de la vis 2 lorsque la tige 3 exerce une charge prédéterminée sur la vis 2, correspondant à une sollicitation mécanique exercée par la tige 3 sur la vis 2 lors d'une rupture de la voie primaire 1.

Dans ce cas, le déplacement relatif de la vis 2 par rapport à la tige 3 en cas de rupture de la voie primaire 1 est détecté de manière indirecte, via la charge exercée par la tige 3 sur la vis 2.

En effet, en cas de rupture de la voie primaire, la tige 3 se déplace par rapport à la vis 2 et exerce alors une contrainte mécanique vis-à-vis de la vis 2 supérieure à un seuil prédéterminé, cette contrainte mécanique étant utilisée par le système 17 de déconnexion pour déconnecter la vis 2 du capteur 15 de position en cas de rupture de la voie primaire 1.

Le dispositif 13 comprend en outre un calculateur 18 configuré pour comparer l'information représentative de la position angulaire de la vis 2 mesurée par le capteur 15 de position, et une information représentative de la position angulaire de la vis 2 mesurée par un second capteur de position 19 du dispositif de détection 13. L'information représentative de la position angulaire de la vis 2 mesurée par le second capteur 19 de position peut être la position angulaire elle-même.

Le second capteur de position 19 diffère du capteur 15 en ce qu'il n'est pas connecté à la vis 2 via le système de déconnexion 17. Le second capteur de position 19 est donc indépendant du système de déconnexion 17. En dehors de cette différence, il s'agit d'un capteur du même type, apte à mesurer une information représentative de la position angulaire de la vis 2. Ce capteur peut être un capteur de position angulaire, linéaire, ou autre, comme décrit précédemment pour le capteur 15.

Il peut par exemple s'agir d'un capteur de position angulaire de l'aéronef lui-même, utilisé pour commander et asservir la rotation de la vis 2 en fonctionnement « normal ».

Il peut avantageusement s'agir en particulier du capteur de position angulaire lié à la vis 2 et existant dans tous les actionneurs de commande de vol, ce qui évite d'installer de nouveaux capteurs. Ce type de capteur est utilisé pour commander et asservir la vis 2 de la voie primaire 1.

Avantageusement, le capteur 15 de position et le second capteur 19 de position sont intégrés dans un unique et même capteur à plusieurs voies.

L'invention permet donc d'utiliser les capteurs déjà en place dans l'aéronef, en intégrant simplement à l'actionneur le dispositif 13 de détection et notamment le système 17 de déconnexion.

Le calculateur 18 peut être un calculateur dédié, ou plus avantageusement, faire partie du calculateur de l'aéronef embarquant l'actionneur 12.

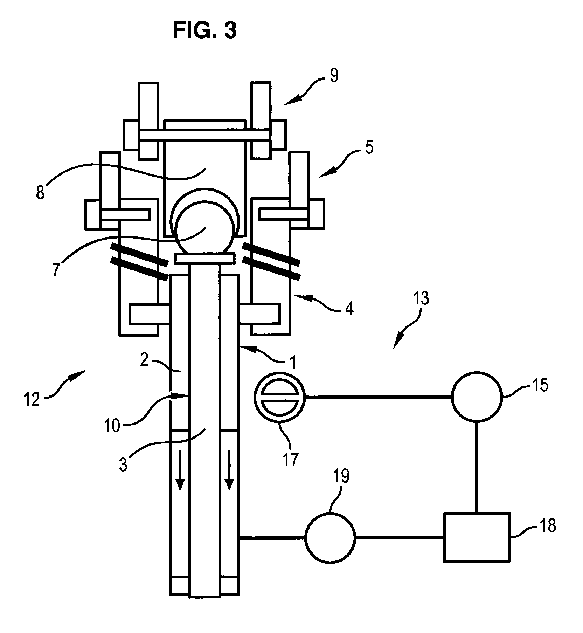

On a représenté en Figure 3 une rupture de la voie primaire 1 et une reprise d'effort de la voie secondaire 10.

La rupture est illustrée au niveau de l'attache haute primaire 4, mais peut être réalisée sur tout élément participant à la voie primaire 1 de l'actionneur.

Avant cette rupture, c'est-à-dire en fonctionnement « normal », le capteur 15 est connecté à la vis 2, et mesure donc une information représentative de la position angulaire de la vis 2.

Par ailleurs, la vis 2 est contrôlée en rotation par le pilote via les commandes de pilotage qu'il communique à l'aéronef. Une information représentative de la position angulaire de la vis 2 est mesurée par un second capteur 19 de position, qui lui continue à mesurer une information représentative de la position angulaire de la vis 2 même en cas de rupture de la voie primaire 1, puisqu'il n'est pas connecté à la vis 2 via le système de déconnexion 17.

En cas de rupture de la voie primaire 1, c'est la voie secondaire 10 qui reprend l'effort. Dans ce cas, la tige 3 subit un déplacement relatif vis-à-vis de la vis 2, ce déplacement dépassant un seuil prédéterminé caractéristique de la rupture de la voie primaire 1.

Lors de ce déplacement supérieur au seuil, le système 17 de déconnexion entraîne la coupure de la liaison entre la vis 2 et le capteur 15 de position.

Par conséquent, le capteur 15 ne mesure plus d'information représentative de la position angulaire de la vis 2.

Le capteur 15 de position mesure alors un signal nul ou constant, ce qui permet de détecter la rupture de la voie primaire 1 et donc la panne.

Avantageusement, la panne est détectée en comparant l'information représentative de la position angulaire mesurée par le capteur 15 de position, et l'information représentative de la position angulaire de la vis 2, mesurée par le second capteur 19 de position.

En effet, en cas de rupture de la voie primaire 1, le second capteur 19 continue à mesurer l'information représentative de la position angulaire de la vis 2 et les variations de ce positionnement.

Si le calculateur 18 compare ce signal avec le signal mesuré par le capteur 15 de position déconnecté de la vis 2 par l'intermédiaire du système 17 de déconnexion, il est clair que les signaux seront différents, alors que précédemment à la panne, ceux-ci étaient égaux ou du moins corrélés.

Avantageusement, le calculateur 18 est configuré pour détecter une panne lorsque la comparaison entre l'information mesurée par le capteur 15 de position et l'information mesurée par le second capteur 19 de position est supérieure ou inférieure à un seuil prédéterminé.

L'invention se démarque de l'état de la technique puisqu'elle détecte une panne directement au niveau de la vis 2 et de la tige 3 de sécurité, et non pas au niveau de l'attache haute 8 de la voie secondaire ou de l'attache haute 4 de la voie primaire.

Etant donné que l'invention ne nécessite pas de positionner de capteurs entre les pièces de l'actionneur, le jeu entre les pièces (« flutter ») peut être réduit ce qui est très avantageux.

En effet, il est connu de l'homme du métier que les spécifications sur le « flutter » sont très exigeantes.

Par ailleurs, la solution proposée est simple et peu coûteuse. Ceci est notamment du au fait que l'invention nécessite peu de capteurs supplémentaires.

On constate également une réduction de la masse avion significative, de l'ordre de 7kg par rapport à certaines solutions de l'art antérieur nécessitant un câblage blindé reliant les capteurs situés au niveau de l'attache haute secondaire au calculateur de l'avion.

De plus, étant donné la simplicité du matériel requis, l'invention est apte à détecter des pannes mêmes dans des conditions extérieures difficiles (températures basses...).

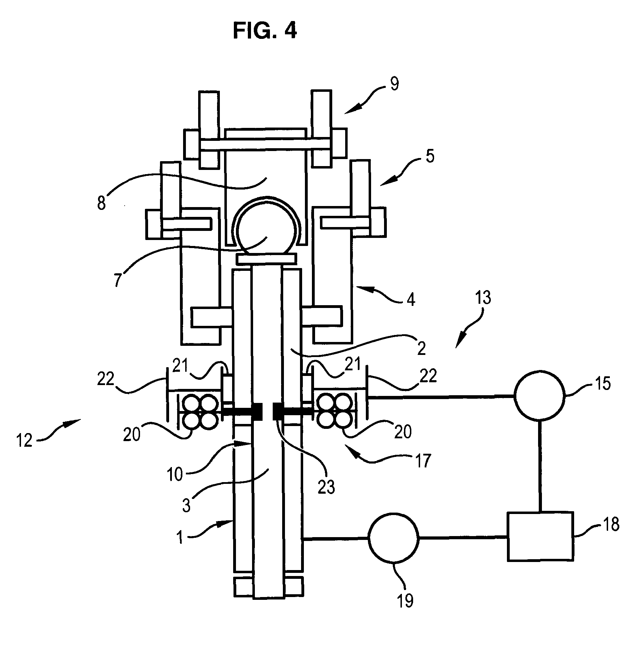

On a représenté en Figure 4 un mode de réalisation particulier du dispositif 13 et de l'actionneur 12 de commande de vol selon l'invention.

Dans ce mode de réalisation, le système de déconnexion 17 comprend un pion 23 ruptible. Ce pion 23 ruptible a une section calibrée pour se rompre à une charge prédéterminée, correspondant à une sollicitation mécanique exercée par la tige 3 sur la vis 2 lors d'une rupture de la voie primaire 1 (rupture de la vis 2 ou d'un autre élément de la voie primaire 1).

En effet, selon l'invention, le système de déconnexion 17 déconnecte la vis 2 du capteur 15 en cas de mouvement relatif de la tige 3 par rapport à la vis 2 lors d'une rupture de la voie primaire 1. Comme énoncé précédemment, ce déplacement entraîne une sollicitation mécanique exercée par la tige 3 sur la vis 2, qui permet donc d'avoir une information sur le mouvement relatif de la tige 3 par rapport à la vis 2.

En dessous de la charge exercée par la tige 3 sur la vis 2 lors d'une rupture de la voie primaire 1, ce pion 23 est calibré pour ne pas se rompre, afin d'éviter les fausses détections. Ce seuil de charge est connu par simulation et/ou mesures *in situ.*

Le pion 23 peut être placé dans une encoche traversant la vis 2 et la tige 3, ou être vissé dans un logement rainuré à cet effet.

De plus, l'axe de ce pion 23 ruptible est soumis à une charge d'extraction prédéterminée, permettant une extraction du pion 23 de la vis 2 en cas de rupture dudit pion 23. Cette charge d'extraction est exercée par des ressorts 20, orthogonalement à la vis 2.

Le pion 23 connecte la vis 2 à un pignon 22, qui, via un train d'engrenages, entraine le capteur de position 15, par exemple un capteur de position angulaire entraîné en rotation.

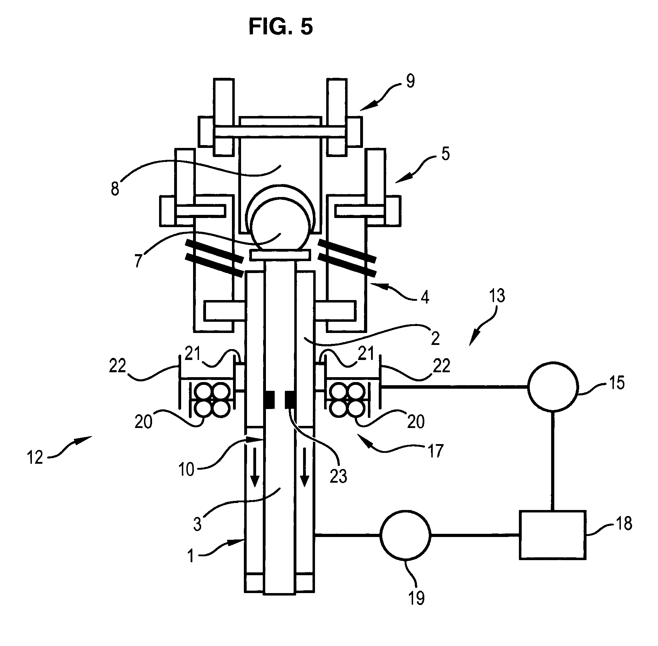

En cas de rupture de la voie primaire 1, et comme illustré en Figure 5, la tige 3 exerce une contrainte mécanique au-dessus du seuil de rupture du pion 23, ce qui entraîne la rupture dudit pion 23. En raison de la charge de ressort exercée sur le pion 23, celui-ci se dégage de la vis 3. En se dégageant, le pignon 22 devient libre en rotation, notamment grâce à un roulement 21.

Le pignon 22 ne recopie donc plus la rotation de la vis 2, ce qui signifie que le capteur 15 ne mesure plus une information représentative de la position angulaire de la vis 2, et est déconnecté de ladite vis 2, ce qui permet de détecter une rupture de la voie primaire 1.

Lorsque le calculateur 8 compare le signal mesuré par le capteur 15 de position avec le signal mesuré par le second capteur de position 19, celui-ci détecte une panne lorsque la comparaison est supérieure (ou inférieure, le cas échéant) à un seuil prédéterminé.

D'autres systèmes de déconnexion 17 sont réalisables.

L'invention s'applique à tout actionneur de commande de vol présentant une voie primaire et une voie secondaire apte à reprendre un effort en cas de rupture de la voie primaire et tel que décrit précédemment.

L'invention offre de nombreux avantages en termes de coût, de simplicité, de fiabilité et d'intégration.

## Revendications

1. Un actionneur de comande de vol, présentant
une voie primaire (1) comportant une vis (2) creuse rotative,
une voie secondaire (10) comportant une tige de sécurité (3) de reprise d'effort traversant la vis (2) avec un dispositif (13) de détection de la rupture de la dite voie primaire,
dans lequel ledit dispositif (13) comprend
un capteur (15) de position, connecté à la vis (2) pour mesurer une information représentative de sa position angulaire, et
ledit dispositif (13) étant caractérise en ce quil comprend
un système (17) de déconnexion, apte à déconnecter le capteur (15) de position de la vis (2) en cas de déplacement relatif de la tige (3) par rapport à la vis (2) lors d'une rupture de la voie primaire (1).

2. Actionneur selon la revendication 1, ledit dispositif (13) comprenant en outre un calculateur (18) configuré pour comparer
l'information mesurée par le capteur (15) de position, et
une information représentative de la position angulaire de la vis (2) mesurée par un second capteur (19) de position indépendant du système (17) de déconnexion.

3. Actionneur selon la revendication 2, dans lequel le calculateur (18) est configuré pour détecter une rupture de la voie primaire (1) lorsque la comparaison est supérieure ou inférieure à un seuil prédéterminé.

4. Actionneur selon l'une des revendications 1 à 3, dans lequel le système de déconnexion (17) est apte à déconnecter le capteur (15) de position de la vis (2) lorsque la tige (3) exerce une charge prédéterminée sur la vis (2), correspondant à une sollicitation mécanique exercée par la tige (3) sur la vis (2) lors d'une rupture de la vis (2) ou d'un autre élément de la voie primaire (1).

5. Actionneur selon l'une des revendications 1 à 4, dans lequel le système (17) de déconnexion comprend un pion (23) ruptible.

6. Actionneur selon la revendication 5, dans lequel le pion (23) ruptible a une section calibrée pour se rompre à une charge prédéterminée, correspondant à une sollicitation mécanique exercée par la tige (3) sur la vis (2) lors d'une rupture de la voie primaire (1).

7. Actionneur selon l'une des revendications 5 ou 6, dans lequel le pion (23) ruptible est soumis à une charge d'extraction prédéterminée, permettant une extraction du pion (23) de la vis (2) en cas de rupture dudit pion (23).

8. Actionneur selon l'une des revendications 1 à 7, dans lequel le capteur (15) de position est un capteur (15) de position angulaire.

## Patentansprüche

1. Flugsteuerungsaktuator, aufweisend:
einen Primärpfad (1), umfassend eine Rotationshohlschraube (2),
einen Sekundärpfad (10), umfassend eine Sicherheitsstange (3) zur Absorption von Spannung, die durch die Schraube (2) tritt, mit einer Vorrichtung (13) zum Erkennen des Bruchs des Primärpfads,
wobei die Vorrichtung (13) Folgendes aufweist:
einen Positionssensor (15), der mit der Schraube (2) verbunden ist, um Informationen zu messen, die ihre Winkelposition darstellen, und
die Vorrichtung (13), die **dadurch gekennzeichnet ist, dass** sie Folgendes aufweist:
ein Trennsystem (17), das den Positionssensor (15) im Fall einer relativen Verlagerung der Stange (3) im Verhältnis zu der Schraube (2) zum Zeitpunkt des Bruchs des Primärpfads (1) von der Schraube (2) trennen kann.

2. Aktuator nach Anspruch 1, wobei die Vorrichtung (13) ferner einen Computer (18) aufweist, der dazu konfiguriert ist, Folgendes zu vergleichen:
die vom Positionssensor (15) gemessenen Informationen und
Informationen, die die Winkelposition der Schraube (2) darstellen, gemessen durch einen zweiten Positionssensor (19), der unabhängig von dem Trennsystem (17) ist.

3. Aktuator nach Anspruch 2, wobei der Rechner (18) dazu konfiguriert ist, den Bruch des Primärpfads (1) zu erkennen, wenn der Vergleich größer oder kleiner als ein im Voraus festgelegter Schwellenwert ist.

4. Aktuator nach einem der Ansprüche 1 bis 3, wobei das Trennsystem (17) den Positionssensor (15) von der Schraube (2) trennen kann, wenn die Stange (3) eine im Voraus festgelegte Belastung auf die Schraube (2) ausübt, die einer mechanischen Spannung entspricht, die zum Zeitpunkt des Bruchs der Schraube (2) oder eines anderen Elements des Primärpfads (1) von der Stange (3) auf die Schraube (2) ausgeübt wird.

5. Aktuator nach einem der Ansprüche 1 bis 4, wobei das Trennsystem (17) einen brechbaren Stift (23) aufweist.

6. Aktuator nach Anspruch 5, wobei der brechbare Stift (23) einen Querschnitt aufweist, der dazu kalibriert ist, bei einer im Voraus festgelegten Belastung zu brechen, die einer mechanischen Spannung entspricht, die zum Zeitpunkt des Bruchs des Primärpfads (1) von der Stange (3) auf die Schraube (2) ausgeübt wird.

7. Aktuator nach Anspruch 5 oder Anspruch 6, wobei der brechbare Stift (23) einer im Voraus festgelegten Extraktionsbelastung ausgesetzt wird, die im Falle des Bruchs des Stifts (23) das Herausziehen des Stifts (23) aus der Schraube (2) ermöglicht.

8. Aktuator nach einem der Ansprüche 1 bis 7, wobei der Positionssensor (15) ein Winkelpositionssensor (15) ist.

## Claims

1. A flight control actuator which has
a primary path (1) comprising a rotary hollow screw (2),
a secondary path (10) comprising a safety rod (3) for uptake of stress passing through the screw (2) with a device (13) for detecting the breakage of said primary path,
in which said device (13) includes
a position sensor (15) connected to the screw (2) in order to measure information representative of its angular position, and
said device (13) being **characterized in that** it includes
a disconnection system (17) capable of disconnecting the position sensor (15) from the screw (2) in case of relative displacement of the rod (3) with respect to the screw (2) at the time of breakage of the primary path (1).

2. Actuator according to Claim 1, said device (13) moreover including a computer (18) configured for comparing
the information measured by the position sensor (15), and
information representative of the angular position of the screw (2) measured by a second position sensor (19) independent of the disconnection system (17).

3. Actuator according to Claim 2, in which the calculator (18) is configured for detecting breakage of the primary path (1) when the comparison is greater than or less than a predetermined threshold.

4. Actuator according to one of Claims 1 to 3, in which the disconnection system (17) is capable of disconnecting the position sensor (15) from the screw (2) when the rod (3) exerts a predetermined load on the screw (2), corresponding to a mechanical stress exerted by the rod (3) on the screw (2) at the time of breakage of the screw (2) or of another element of the primary path (1).

5. Actuator according to one of Claims 1 to 4, in which the disconnection system (17) includes a breakable pin (23).

6. Actuator according to Claim 5, in which the breakable pin (23) has a cross section calibrated to break with a predetermined load, corresponding to a mechanical stress exerted by the rod (3) on the screw (2) at the time of breakage of the primary path (1).

7. Actuator according to either Claim 5 or Claim 6, in which the breakable pin (23) is subjected to a predetermined extraction load allowing extraction of the pin (23) from the screw (2) in case of breakage of said pin (23).

8. Actuator according to one of Claims 1 to 7, in which the position sensor (15) is an angular position sensor (15).
